# FASCICULE DE BREVET EUROPEEN

(11) **EP 1 202 467 B1**
(45) Date de publication et mention de la délivrance du brevet: **07.07.2004**
(21) Numéro de dépôt: 01203948.3
(22) Date de dépôt: 17.10.2001
(51) Int. Cl.: H04B 1/40, H04B 1/04, H03F 3/72

(54) **Emetteur de signaux à commande impulsionnelle d'amplification**
Signalsender mit Impulssteuerung der Verstärkung
Signal transmitter with impulse control of amplification

(30) Priorité: 24.10.2000 FR 0013622
(43) Date de publication de la demande: 02.05.2002
(73) Titulaire: Koninklijke Philips Electronics N.V., 5621 BA Eindhoven (NL)
(72) Inventeur: Charley, Sylvain, 75008 Paris (FR); Savin, Emmanuel, 75008 Paris (FR)
(74) Mandataire: Chaffraix, Jean

(56) Documents cités:
- WO-A-99/67893
- US-A- 5 774 017
- US-A- 5 926 013

## Description

La présente invention concerne un émetteur de signaux radioélectriques, incluant une pluralité d'amplificateurs, chacun optimisé pour opérer une amplification d'un signal ayant une fréquence incluse dans une bande de fréquence prédéterminée, ledit signal étant alternativement porteur d'informations et au repos pendant des premier et deuxième intervalles de temps prédéterminés.

Un appareil de ce type, par exemple un radiotéléphone, est capable d'interagir avec une pluralité de réseaux de communication, chacun de ces réseaux étant conçu pour l'acheminement de signaux dont la fréquence se trouve dans une bande de fréquences le plus souvent prédéterminée par une norme.

La norme GSM, par exemple, prévoit une bande de fréquences allant de 880 à 915 MHz, tandis que la norme DCS1800 prévoit une bande de fréquences allant de 1710 à 1795 MHz. D'autres normes, comme l'AMPS (acronyme de Advanced Mobile Phone System), ou encore le PCS (acronyme de Personnal Communication System), pour ne citer que celles-ci, prévoient des bandes de fréquence centrées autour de 800 et 190 MHz, respectivement.

L'appareil émetteur capable d'interagir avec plusieurs réseaux, souvent appelé multistandard, génèrera donc, en fonction du réseau avec lequel il doit communiquer, un signal radio ayant une fréquence adéquate, c'est-à-dire incluse dans la bande de fréquence prévue par la norme correspondante. Ce signal radio est amplifié par un amplificateur de puissance avant son émission au moyen d'un système d'antenne.
Il est connu qu'un amplificateur fonctionne de manière optimale dans une bande de fréquence donnée, c'est pourquoi un appareil émetteur capable de communiquer avec une pluralité de réseaux de communication contient le plus souvent autant d'amplificateurs de puissance, disposés en parallèle en amont du système d'antenne, que de réseaux susceptibles d'interagir avec ledit appareil.
Lorsque l'appareil est en fonctionnement, les amplificateurs de puissance reçoivent tous le signal radio, mais un seul d'entre eux peut fournir un signal amplifié de manière optimale dans la bande de fréquence dans laquelle se trouve le signal radio. Il faut donc inhiber tous les autres amplificateurs de puissance ainsi que présenté dans le document US5774017 de l'art antérieur. Ceci est réalisé usuellement en appliquant une tension négative sur des entrées des amplificateurs à désactiver, ce qui autorise une sélection permanente de l'amplificateur de puissance le mieux adapté, les tensions négatives étant appliquées tout au long d'un intervalle de temps pendant lequel il est établi que l'appareil doit utiliser un réseau de communication donné.
Les appareils émetteurs multistandard connus doivent donc comporter des moyens pour générer une tension négative continue. Deux types de solution existent à cet effet. Une première solution consiste à amplifier et à redresser une porteuse du signal radio. Cette solution, qui est par exemple mise en oeuvre dans les circuits MRFIC0919 et MRFIC1819 commercialisés par la société Motorola, nécessite une circuiterie complexe et coûteuse pour son
implémentation, ce qui a pour effet d'augmenter de manière significative le prix de revient de l'appareil émetteur.
Une deuxième solution consiste à utiliser un convertisseur continu-continu en guise de générateur de tension négative, comme c'est le cas par exemple dans les circuits Motorola MC33169 et MC33170. De tels convertisseurs sont toutefois bruyants et nécessitent un filtrage des signaux qu'ils délivrent afin d'empêcher que lesdits signaux n'introduisent des raies parasites dans le signal radio. Ce type de filtrage requiert également la mise en oeuvre de structures complexes et coûteuses.

L'invention a pour but de remédier à ces inconvénients en proposant un appareil émetteur dans lequel l'inhibition des amplificateurs de puissance qui ne sont pas optimisés pour la bande de fréquence incluant la fréquence du signal radio peut être opérée sans pour autant nécessiter de génération d'une tension négative continue.

En effet, selon l'invention, un appareil émetteur conforme au paragraphe introductif inclut :
. des moyens de détection destinés à délivrer un signal de détection ayant des états actif et inactif pendant les premier et deuxième intervalles de temps prédéterminés, respectivement, et
. des moyens de contrôle destinés à délivrer, lorsque le signal de détection est actif, des signaux d'inhibition destinés à rendre inactifs ceux des amplificateurs qui ne sont pas optimisés pour opérer une amplification dans la bande de fréquence incluant la fréquence du signal à amplifier.

Dans un tel appareil, la sélection de celui des amplificateurs qui est optimisé pour amplifier le signal radio n'est pas faite de manière permanente, mais de manière impulsionnelle, c'est-à-dire uniquement quand le signal à amplifier est effectivement porteur d'informations. Ceci signifie qu'il n'est pas nécessaire d'utiliser une tension négative continue pour inhiber les autres amplificateurs, mais une succession impulsions, qui sont plus aisées à générer, par exemple sur la base du signal radio lui-même.

Dans un de ses modes de réalisation, l'invention concerne également un générateur d'impulsions de tension négatives présentant une borne de sortie destinée à produire lesdites impulsions et une borne d'entrée destinée à recevoir un signal de commande destiné à présenter de façon périodique un état actif pendant une durée définissant la largeur des impulsions, générateur incluant un élément capacitif dont une borne est reliée à la borne de sortie du générateur et dont une autre borne est reliée à des première et deuxième bornes d'alimentation via une résistance et un trajet principal de courant d'un premier transistor, respectivement, premier transistor dont la conduction est contrôlée au moyen du signal de commande.

Sous une forme plus générale, l'invention concerne un procédé pour sélectionner un amplificateur parmi une pluralité d'amplificateurs dont chacun est optimisé pour opérer une amplification d'un signal ayant une fréquence incluse dans une bande de fréquences prédéterminée, en vue d'une amplification d'un signal alternativement porteur d'informations et au repos pendant des premier et deuxième intervalles de temps prédéterminés, procédé incluant une étape d'inhibition, pendant le premier intervalle de temps, de ceux des amplificateurs qui ne sont pas optimisés pour opérer une amplification dans la bande de fréquence incluant la fréquence du signal à amplifier.

Dans un mode de mise en oeuvre de ce procédé, l'inhibition d'un amplificateur sera avantageusement opérée au moyen de l'application d'une impulsion de tension négative, ayant pour durée le premier intervalle de temps prédéterminé, à une borne d'entrée dudit amplificateur.

L'invention sera mieux comprise à l'aide de la description suivante, faite à titre d'exemple non-limitatif et en regard des dessins annexés, dans lesquels :
- la figure 1 est un schéma fonctionnel partiel décrivant un émetteur de signaux conforme à l'invention, et
- la figure 2 est un schéma électrique décrivant un mode de réalisation de moyens de contrôle inclus dans un tel appareil.

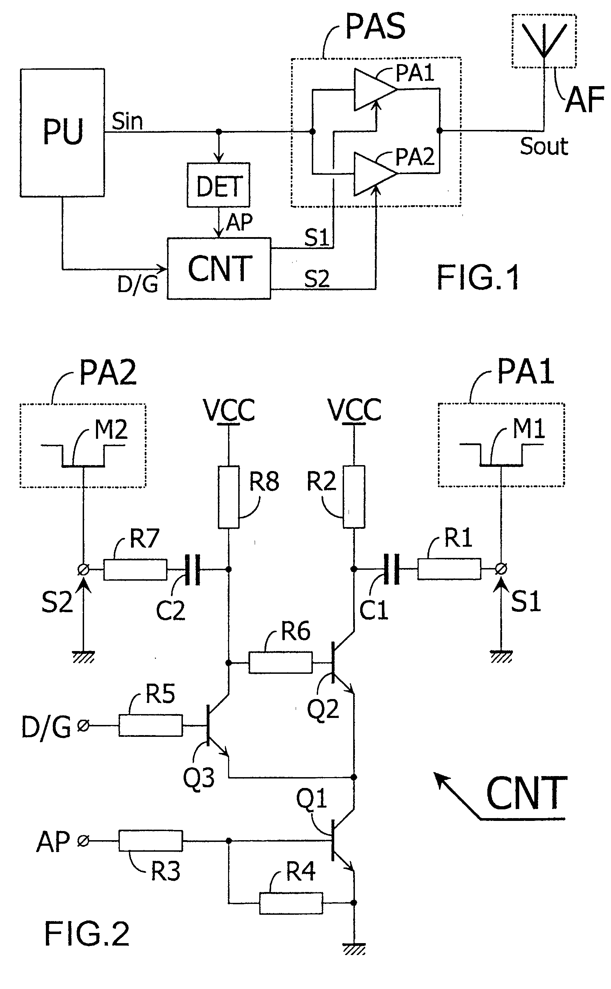

La figure 1 représente schématiquement un appareil émetteur de signaux radioélectriques selon un mode de réalisation particulier de l'invention. Cet appareil comporte un étage d'amplification PAS incluant deux amplificateurs PA1 et PA2 et destiné à opérer une amplification d'un signal Sin, appelé signal radio, avant son émission, sous la forme d'un signal Sout, au moyen d'un système d'antenne AF. Le signal radio Sin est généré par une unité de traitement PU et a une fréquence qui, dans cet exemple, sera incluse dans une première ou une deuxième bande de fréquences. A titre d'exemple, si l'appareil émetteur est capable de communiquer avec des réseaux conformes aux normes GSM et DCS1800, la première bande de fréquence ira de 880 à 915 MHz, tandis que la deuxième bande de fréquences ira de 1710 à 1795 MHz. Les premier et deuxième amplificateurs PA1 et PA2 sont optimisés pour fonctionner dans les première et deuxième bandes de fréquences, respectivement.
Conformément aux normes précitées, le signal radio Sin sera alternativement porteur d'informations et au repos pendant des premier et deuxième intervalles de temps prédéterminés. A titre d'exemple, la norme GSM prévoit que le premier intervalle de temps a une durée de 0,57ms, tandis que le deuxième intervalle de temps a une durée de 4,13ms. L'appareil émetteur inclut en outre des moyens de détection DET destinés à délivrer un signal de détection AP ayant des états actif et inactif pendant les premier et deuxième intervalles de temps prédéterminés, respectivement, c'est-à-dire que le signal de détection prendra par exemple un niveau logique 1 lorsque le signal radio Sin est porteur d'informations, et un niveau logique 0 sinon. Dans d'autres modes de réalisation de invention, les moyens de détection DET pourront être incorporés au sein même de l'unité de traitement PU.
L'appareil émetteur inclut de plus des moyens de contrôle CNT destinés à délivrer, lorsque le signal de détection AP est actif, c'est-à-dire lorsque le signal radio Sin est porteur d'informations, des signaux d'inhibition S1 et S2 destinés à rendre inactif celui des premier et deuxième amplificateurs PA1 et PA2 qui n'est pas optimisé pour opérer une amplification dans la bande de fréquences dans laquelle se trouve le signal radio Sin.
Dans cet exemple, un signal D/G fourni par l'unité de traitement PU indique par son état dans quelle bande de fréquences le signal Sin se trouve. Ainsi, si le signal D/G est au niveau logique 0, indiquant que le signal radio Sin est conforme à la norme DCS1800, seul le signal d'inhibition S1 pourra présenter des impulsions négatives afin d'inhiber le premier amplificateur PA1 destiné à amplifier des signaux conformes à la norme GSM.
Réciproquement, si le signal D/G est au niveau logique 1, indiquant que le signal radio Sin est conforme à la norme GSM, seul le signal d'inhibition S2 pourra présenter des impulsions négatives afin d'inhiber le deuxième amplificateur PA2 destiné à amplifier des signaux conformes à la norme DCS1800.

La figure 2 est un schéma électrique qui représente des moyens de contrôle CNT dans un mode de réalisation préféré de l'invention. Ces moyens de contrôle incluent deux générateurs d'impulsions de tension négatives imbriqués, chacun présentant une borne de sortie destinée à produire lesdites impulsions S1 ou S2 et une borne d'entrée destinée à recevoir le signal de détection AP. Les impulsions S1 ou S2 seront appliquées à une borne de polarisation d'au moins un transistor M1 ou M2 inclus dans l'amplificateur de puissance PA1 ou PA2.
Si l'amplificateur de puissance est réalisé en technologie MOS, la borne de polarisation d'un transistor est sa grille. Si l'amplificateur de puissance est réalisé en technologie bipolaire, la borne de polarisation d'un transistor est sa base.
Chaque générateur inclut un élément capacitif C1 ou C2, dont une borne est reliée à la borne de sortie dudit générateur et dont une autre borne est reliée à une première borne d'alimentation VCC via une résistance R2 ou R8, et à une masse du circuit via un trajet principal de courant d'un premier transistor Q1, dont la conduction est contrôlée au moyen du signal de détection AP.
Chaque générateur d'impulsions de tension négatives inclut en outre un deuxième transistor, Q2 ou Q3, dont le trajet principal de courant est disposé en série avec celui du premier transistor Q1, deuxième transistor Q2 ou Q3 dont la conduction est contrôlée au moyen du signal de sélection D/G. Ceci permet de désactiver chaque générateur lorsque la fréquence du signal à amplifier est incluse dans la bande de fréquence pour laquelle l'amplificateur auquel est reliée la borne de sortie dudit générateur est optimisé, ainsi qu'exposé plus haut.
Les moyens de contrôle fonctionnent de la manière suivante :
Si le signal de sélection D/G est au niveau logique 0, indiquant que le signal radio Sin est conforme à la norme DCS1800, le deuxième transistor Q3 du premier générateur est bloqué, tandis que le deuxième transistor Q2 du premier générateur est passant, puisque sa base est alors raccordée à la borne d'alimentation VCC via deux résistances R8 et R6.
Tant que le signal de détection AP est au niveau logique 0, le premier transistor Q1 est bloqué et les éléments capacitifs C1 et C2 des premier et deuxième générateurs sont chargés puisqu'ils sont raccordés à la borne d'alimentation VCC via les résistances R2 et R8, respectivement. Lorsque, pendant le premier intervalle de temps, le signal de détection AP est au niveau logique 1, indiquant le fait que le signal radio est porteur d'informations, le premier transistor Q1 est conducteur et la borne de l'élément capacitif C1 du premier générateur qui n'est pas relié à la borne de sortie dudit premier amplificateur est connectée à la masse. La tension qui a été mémorisée dans ledit élément capacitif C1 est à présent appliquée, en sens inverse, à la borne de sortie du premier générateur, créant une tension S1 négative et inhibant ainsi le premier amplificateur PA1 dédié à l'amplification de signaux radio conformes à la norme GSM. Le deuxième transistor Q3 du deuxième générateur étant bloqué, l'élément capacitif C2 dudit générateur reste connecté à la borne d'alimentation VCC, empêchant ainsi la génération d'une tension S2 négative.
Lorsque le signal de détection AP prend à nouveau l'état inactif, c'est-à-dire pendant le deuxième intervalle de temps, le premier transistor Q1 se bloque et l'élément capacitif C1 du premier générateur de tension est à nouveau relié à la borne d'alimentation VCC. Le signal d'inhibition S1 revient alors au repos, et aura donc présenté une valeur négative tout au long du premier intervalle de temps.
Ainsi, lorsque le signal de sélection D/G est au niveau logique 0, indiquant que le signal radio est conforme à la norme DCS1800, seul le signal d'inhibition S1 pourra présenter des impulsions négatives afin d'inhiber le premier amplificateur PA1 destiné à amplifier des signaux conformes à la norme GSM.
Une explication similaire à celle donnée ci-dessus démontre que lorsque le signal de sélection D/G est au niveau logique 1, indiquant que le signal radio est conforme à la norme GSM, seul le signal d'inhibition S2 pourra présenter des impulsions négatives afin d'inhiber le deuxième amplificateur PA2 destiné à amplifier des signaux conformes à la norme DCS1800.

## Revendications

1. Emetteur de signaux radioélectriques, incluant une pluralité d'amplificateurs [PA1, PA2], chacun optimisé pour opérer une amplification d'un signal [Sin] ayant une fréquence incluse dans une bande de fréquence prédéterminée, **caractérisé en ce que**, ledit signal [Sin] étant alternativement porteur d'informations et au repos pendant des premier et deuxième intervalles de temps prédéterminés, ledit émetteur inclut en outre :
. des moyens de détection [DET] destinés à délivrer un signal de détection [AP] ayant des états actif et inactif pendant les premier et deuxième intervalles de temps prédéterminés, respectivement, et
. des moyens de contrôle [CNT] destinés à délivrer seulement, lorsque le signal de détection [AP] est actif, des signaux d'inhibition [S1, S2] destinés à rendre inactifs ceux des amplificateurs qui ne sont pas optimisés pour opérer une amplification dans la bande de fréquence incluant la fréquence du signal [Sin] à amplifier.

2. Emetteur de signaux radioélectriques selon la revendication 1, dans lequel les signaux d'inhibition [S1, S2] sont des tensions négatives destinées à être appliquées à des bornes de polarisation de transistors inclus dans les amplificateurs [PA1, PA2].

3. Emetteur de signaux radioélectriques selon la revendication 2, dans lequel les moyens de contrôle [CNT] incluent une pluralité de générateurs d'impulsions de tension négatives, chacun présentant une borne de sortie destinée à produire lesdites impulsions [S1, S2] et une borne d'entrée destinée à recevoir le signal de détection [AP], chaque générateur incluant un élément capacitif [C1, C2] dont une borne est reliée à la borne de sortie du générateur et dont une autre borne est reliée à des première et deuxième bornes d'alimentation [VCC] via une résistance [R2, R8] et un trajet principal de courant d'un premier transistor [Q1], respectivement, premier transistor dont la conduction est contrôlée au moyen du signal de détection [AP], chaque générateur pouvant être désactivé lorsque la fréquence du signal [Sin] à amplifier est incluse dans la bande de fréquence pour laquelle l'amplificateur auquel est reliée la borne de sortie dudit générateur est optimisé.

4. Emetteur de signaux radioélectriques selon la revendication 3, dans lequel chaque générateur d'impulsions de tension négatives [S1, S2] inclut en outre un deuxième transistor [Q2 ou Q3] dont le trajet principal de courant est disposé en série avec celui du premier transistor [Q1], deuxième transistor [Q2 ou Q3] dont la conduction est contrôlée au moyen d'un signal de sélection [D/G] présentant un état actif lorsque la fréquence du signal à amplifier [Sin] n'est pas incluse dans la bande de fréquence pour laquelle l'amplificateur auquel est reliée la borne de sortie dudit générateur est optimisé, et inactif sinon.

5. Procédé pour sélectionner un amplificateur parmi une pluralité d'amplificateurs [PA1, PA2] dont chacun est optimisé pour opérer une amplification d'un signal [Sin] ayant une fréquence incluse dans une bande de fréquences prédéterminée, **caractérisé en ce que**, en vue d'une amplification d'un signal [Sin] alternativement porteur d'informations et au repos pendant des premier et deuxième intervalles de temps prédéterminés, ledit procédé inclut une étape d'inhibition, pendant le premier intervalle de temps, de ceux des amplificateurs [PA1, PA2] qui ne sont pas optimisés pour opérer une amplification dans la bande de fréquences incluant la fréquence du signal à amplifier.

6. Procédé selon la revendication 5, dans lequel l'inhibition d'un amplificateur est opérée au moyen de l'application d'une impulsion de tension négative [S1, S2], ayant pour durée le premier intervalle de temps prédéterminé, à une borne d'entrée dudit amplificateur.

## Claims

1. A transmitter of radio signals comprising a plurality of amplifiers [PA1, PA2], each amplifier being optimized to amplify a signal (Sin) whose frequency is included in a predetermined frequency band, said signal [Sin] alternately carrying information and being in the quiescent state during first and second predetermined periods of time, said transmitter additionally comprising:
- detection means [DET] intended to supply a detection signal [AP] having active and inactive states during the first and the second predetermined periods of time, respectively, and
- control means [CNT] intended to supply inhibition signals [S1, S2] only when the detection signal is in the active state, which inhibition signals [S1, S2] are intended to render those amplifiers inactive that are not optimized to execute an amplification in the frequency band wherein the frequency of the signal [Sin] to be amplified is included.

2. A transmitter of radio signals as claimed in claim 1, wherein the inhibition signals [S1, S2] are negative voltages intended to be applied to the polarization terminals of transistors included in the amplifiers [PA1, PA2].

3. A transmitter of radio signals as claimed in claim 2, wherein the control means [CNT] include a plurality of generators of negative voltage pulses, each generator having an output terminal intended to produce said pulses [S1, S2], and an input terminal intended to receive the detection signal [AP], and each generator including a capacitive element [C1, C2], one terminal of which is connected to the output terminal of the generator, and another terminal of which is connected to first and second supply terminals [VCC] via a resistor [R2, R8] and a main current path of a first transistor [Q1], respectively, the conduction of said first transistor being regulated by means of the detection signal [AP], each generator being capable of being deactivated when the frequency of the signal [Sin] to be amplified is included in the frequency band for which the amplifier to which the output terminal of this generator is connected is optimized.

4. A transmitter of radio signals as claimed in claim 3, wherein each generator [S1, S2] of negative voltage pulses additionally comprises a second transistor [Q2 oe Q3] whose main current path is arranged in series with that of the first transistor [Q1], the conduction of said second transistor [Q2 or Q3] being regulated by means of a selection signal [D/G], said selection signal being in the active state when the frequency of the signal to be amplified [Sin] is not included in the frequency band for which the amplifier to which the output terminal of this generator is connected is optimized, and said selection signal being in the inactive state in the opposite case.

5. A method of selecting an amplifier from a plurality of amplifiers [PA1, PA2], each one of said amplifiers being optimized to amplify a signal [Sin] whose frequency is included in a predetermined frequency band with a view to amplifying a signal [Sin] that alternates between carrying information and being in the quiescent state during first and second predetermined periods of time, which method includes an inhibition step, during the first period of time, thereby inhibiting those amplifiers [PA1, PA2] which are not optimized to execute an amplification in the frequency band wherein the frequency of the signal to be amplified is included.

6. A method as claimed in claim 5, wherein an amplifier is inhibited by applying a negative voltage pulse [S1, S2] to an input terminal of said amplifier, the duration of said pulse being equal to the predetermined first period of time.

## Patentansprüche

1. Sender von Funksignalen mit einer Vielzahl von Verstärkern [PA1, PA2], jeweils optimiert zur Ausführung einer Verstärkung eines Signals [Sin] mit einer in einem vorbestimmten Frequenzbereich enthaltenen Frequenz, wobei das besagte Signal [Sin] abwechselnd Informationsträger und ruhend ist während dem ersten und zweiten vorbestimmten Zeitintervall, wobei das besagte Sendegerät weiterhin enthält:
. Detektionsmittel [DET] zur Abgabe eines Detektionssignals [AP] mit aktiven und inaktiven Zuständen während dem ersten und zweiten Intervall respektive vorbestimmter Zeiten und
. Steuermittel [CNT] zur Abgabe, nur wenn das Detektionssignal [AP] aktiv ist, der Unterdrückungssignale [S1, S2], um diejenigen Verstärker zu deaktivieren, die nicht für eine Verstärkung im dem Frequenzbereich geeignet sind, in dem die Frequenz des zu verstärkenden Signals [Sin] liegt.

2. Sender von Funksignalen nach Anspruch 1, in dem die Unterdrückungssignale [S1, S2] dafür bestimmte negative Spannungen sind, den Polarisationsklemmen von in den Verstärkern [PA1, PA2] enthaltenen Transistoren zugeführt zu werden.

3. Sender von Funksignalen nach Anspruch 2, in dem Die Steuermittel [CNT] eine Vielzahl von Generatoren negativer Impulse enthalten, die jeweils eine dafür bestimmte Ausgangsklemme aufweisen, um die besagten Impulse [S1, S2] abzugeben, und eine für den Erhalt des Detektionssignals [AP] bestimmte Eingangsklemme, wobei der Generator ein kapazitives Element [C1, C2] enthält, dessen eine Klemme mit der Klemme des Ausgangs des Generators verbunden ist und dessen andere Klemme respektive über einen Widerstand [R2, R8] und einen Hauptstromweg eines ersten Transistors [Q1] mit der ersten und zweiten Versorgungsklemme [VCC] verbunden ist, die Leitung des ersten Transistors mittels dem Detektionssignal [AP] gesteuert wird und die Leitung jedes Generators deaktiviert werden kann, wenn die Frequenz des zu verstärkenden Signals [Sin] in dem Frequenzbereich liegt, für den der Verstärker, zu dem die Ausgangsklemme des besagten Generators führt, optimiert ist.

4. Sender von Funksignalen nach Anspruch 3, in dem jeder Generator von Impulsen negativer Spannung [S1, S2] außerdem einen zweiten Transistor [Q2 oder Q3] enthält, dessen Hauptstromweg in Serie mit dem des ersten Transistors [Q1[ oder des zweiten Transistors [Q2 oder Q3] angeordnet ist, dessen Leitung mittels des Auswahlsignals [D/G] gesteuert wird, das wenn die Frequenz des zu verstärkenden Signals [Sin] nicht in dem Frequenzbereich enthalten ist, für den der Verstärker, mit dem die Ausgangsklemme des besagten Generators verbunden ist, optimiert ist, einen aktiven, und ansonsten einen inaktiven Zustand zeigt.

5. Verfahren zur Auswahl eines Verstärkers unter eine Vielzahl von Verstärkern [PA1, PA2], jeweils optimiert zur Ausführung einer Verstärkung eines Signals [Sin] mit einer in einem vorbestimmten Frequenzbereich enthaltenen Frequenz, wobei das besagte Signal [Sin] abwechselnd Informationsträger und ruhend ist während dem ersten und zweiten vorbestimmten Zeitintervall, wobei das Verfahren während dem ersten Zeitintervall einen Unterdrückungsschritt derjenigen Verstärker [PA1, PA2] enthält, die nicht dafür optimiert sind, eine Verstärkung in dem Frequenzbereich auszuführen, in dem die Frequenz des zu verstärkenden Signals liegt.

6. Verfahren nach Anspruch 5, in dem die Unterdrückung eines Verstärkers mittels der Anwendung eines negativen Spannungsimpulses [S1, S2] mit der Dauer des ersten vorbestimmten Zeitintervalls ein einer Eingangsklemme des besagten Verstärkers ausgeführt wird.
